# EUROPEAN PATENT APPLICATION

(11) **EP 4 764 874 A1**
(43) Date of publication of application: **24.06.2026**
(21) Application number: 25224922.2
(22) Date of filing: 18.12.2025
(51) Int. Cl.: G06F 12/109, G06F 12/14

(54) **SYSTEM AND METHOD FOR CONTROLLING ACCESS TO PHYSICAL ADDRESS SPACE**

(30) Priority: 19.12.2024 US 202463735994 P; 14.12.2025 US 202519419090
(71) Applicant: MediaTek Inc., Hsinchu City 30078 (TW)
(72) Inventor: HSIAO, Chih-Hsiang, 30078 Hsinchu City (TW); CHU, Yu-Chi, 30078 Hsinchu City (TW); CHEN, Kuo-An, 30078 Hsinchu City (TW); LU, Wei-Hao, 30078 Hsinchu City (TW); SU, Chih-Pin, 30078 Hsinchu City (TW)
(74) Representative: Pfenning, Meinig & Partner mbB

(57) **Abstract**

A system (20) for controlling access to a physical address (PA) space (510) includes a plurality of processing circuits (12) executing a plurality of virtual machines (VMs) (230), a plurality of system resources (220, 222) addressable within the PA space (510), a plurality of memory management units (MMUs) (215, 216) coupled to corresponding processing circuits, and a plurality of memory protection units (MPUs) (227, 247). A given region of the PA space (510) is dedicated to addressing the plurality of VMs (230). A given MMU translates a virtual address from a requesting processing circuit into a requested PA that is accessible by the requesting processing circuit according to a configurable setting of the given MMU. A given MPU coupled to a target system resource grants or denies the access request according to a sideband signal in a page table entry utilized by the plurality of MMUs for virtual-to-physical address translation.

## Description

### Field of the Invention

This invention relates to a system and an associated method capable of using hardware VMs to provide memory protection.

### Background of the Invention

A hypervisor enables multiple operating systems to run in parallel on a single physical machine. These operating systems, referred to as "guest operating systems," can include multiple instances of an operating system as well as different operating systems. Multiple VMs can run on the hypervisor. Each VM runs a guest operating system to manage resource allocation for the VM. The hypervisor typically uses a memory management unit (MMU) to support address translation and memory protection for the VMs. In a multi-processor system, each processor core can have its own MMU.

An MMU is responsible for translating virtual addresses to physical addresses. The MMU may include one or more translation look-aside buffers (TLBs) to store a mapping between virtual addresses and their corresponding physical addresses. Some MMUs provide a two-stage memory translation mechanism. Every memory access from applications running on a VM undergoes a two-stage translation in the MMU. A guest operating system configures first-stage translation tables that map a virtual address to an intermediate physical address. The hypervisor configures second-stage translation tables that map the intermediate physical address to a physical address. Thus, the two-stage translation enables a hypervisor to control the guests' view of the memory and to restrict the physical memory that a guest can access.

MMU hardware can be complex and costly. Management of the MMU often requires highly complex software and causes a negative impact on memory usage and performance. Furthermore, complexity is greatly increased and security can be compromised in a shared memory environment where multiple devices can access the same memory location. Thus, there is a need for developing a low-complexity and low-overhead memory protection scheme for a virtual machine system.

### Summary of the Invention

The invention aims at providing a system and a method for controlling access to a physical address (PA) space, in order to address the above-mentioned issues. This is achieved by a system and a method according to claims 1 and 9, respectively. The dependent claims pertain to corresponding further developments and improvements.

As will be seen more clearly from the detailed description below, the claimed system for controlling access to a PA space further comprises a plurality of processing circuits executing a plurality of VMs, a plurality of system resources addressable within the PA space, a plurality of MMUs coupled to corresponding processing circuits, and a plurality of memory protection units (MPUs). A given region of the PA space is dedicated to addressing the plurality of VMs. A given MMU is arranged to translate a virtual address indicated in an access request from a requesting processing circuit into a requested PA that is accessible by the requesting processing circuit according to a configurable setting of the given MMU. A given MPU, which is coupled to a target system resource allocated with the requested PA, is arranged to grant or deny the access request according to a sideband signal, wherein the sideband signal is comprised in a page table entry utilized by the plurality of MMUs for virtual-to-physical address translation, and the sideband signal indicates whether the requested PA is accessible to a requesting VM executed on the requesting processing circuit.

As will be seen more clearly from the detailed description below, the claimed method for controlling access to a PA space in a system that comprises a plurality of processing circuits and a plurality of system resources further comprises: receiving an access request from a requesting processing circuit for accessing a virtual address, wherein the requesting processing circuit executes a requesting VM, and a given region of the PA space is dedicated to addressing VMs executed in the system; translating, by a given MMU coupled to the requesting processing circuit, the virtual address into a requested PA that is accessible to the requesting processing circuit according to a configurable setting of the given MMU; and granting or denying, by a given MPU coupled to a target system resource allocated with the requested PA, the access request according to a sideband signal, wherein the sideband signal is comprised in a page table entry utilized by the given MMU for virtual-to-physical address translation, and the sideband signal indicates whether the requested PA is accessible to a requesting VM executed on the requesting processing circuit.

### Brief Description of the Drawings

In the following, the invention is further illustrated by way of example, taking reference to the following drawings. Thereof:
FIG. 1 is a diagram illustrating an electronic device according to an embodiment of the present invention.
FIG. 2 is a diagram illustrating a system for controlling access to a PA space according to an embodiment of the present invention.
FIG. 3 is a diagram illustrating a format of a PTE utilized by an MMU for virtual-to-physical address translation according to an embodiment of the present invention.
FIG. 4 is a diagram illustrating a process including multiple stages of address mapping in response to an access request according to an embodiment of the present invention.
FIG. 5 is a diagram illustrating the management of memory protection according to an embodiment of the present invention.
FIG. 6 is a diagram illustrating an address mapping relationship between VMs and a PA space according to an embodiment of the present invention.
FIG. 7 is a flow chart of a method for controlling access to a PA space according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...".

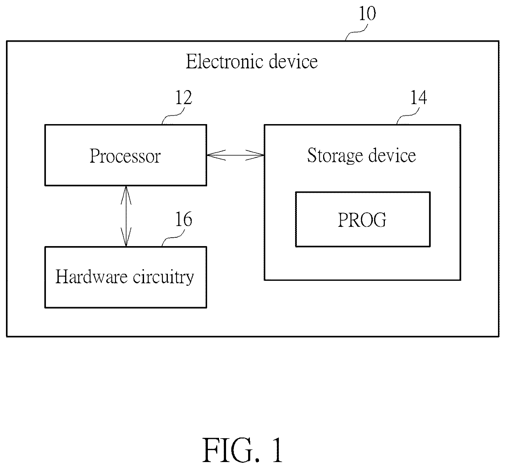

FIG. 1 is a diagram illustrating an electronic device 10 according to an embodiment of the present invention. By way of example, but not limitation, the electronic device 10 may be a portable device such as a smartphone or a tablet. The electronic device 10 may include a processor 12, a storage device 14, and hardware circuitry 16. The processor 12 may be a single-core processor or a multi-core processor. The storage device 14 is a non-transitory machine-readable medium, and is arranged to store computer program code PROG. The processor 12 is equipped with software execution capability. The computer program code PROG may include a plurality of software modules. As a result, when loaded and executed by the processor 12, the computer program code PROG instructs the processor 12 to perform designated functions of the software modules. The electronic device 10 may be regarded as a computer system using a computer program product that includes a computer-readable medium containing the computer program code PROG. The hardware circuitry 16 is pure hardware that may consist of logic gates only, and performs designated functions without software execution. Regarding a system for controlling access to a physical address (PA) space as proposed by the present invention, it may be embodied on the electronic device 10. For example, the system may include software-based functions implemented by the computer program code PROG running on the processor 12 and hardware-based functions implemented by the hardware circuitry 16.

The present invention provides an access control mechanism that uses a combination of second-stage memory management units (MMUs) and memory protection units (MPUs) to control access to a PA space. By using hardware such as registers, the system configures a predetermined number of virtual machines (VMs) and a given region of the PA space dedicated to addressing the VMs. These VMs are herein referred to as hardware VMs or simply as VMs. The VMs provide a low-complexity alternative or addition to the access control by conventional MMUs. The VMs also combine the advantages of both master-side access control by MMUs and target-side access control by MPUs.

In one embodiment, an MMU manager manages the configuration of the second-stage MMUs; e.g., which masters have access rights to which physical addresses. Additionally, a hardware VM manager manages the configuration of the MPUs; e.g., which VM has access rights to which physical addresses. In one embodiment, the access control of either the second-stage MMUs or the MPUs can be enabled or disabled.

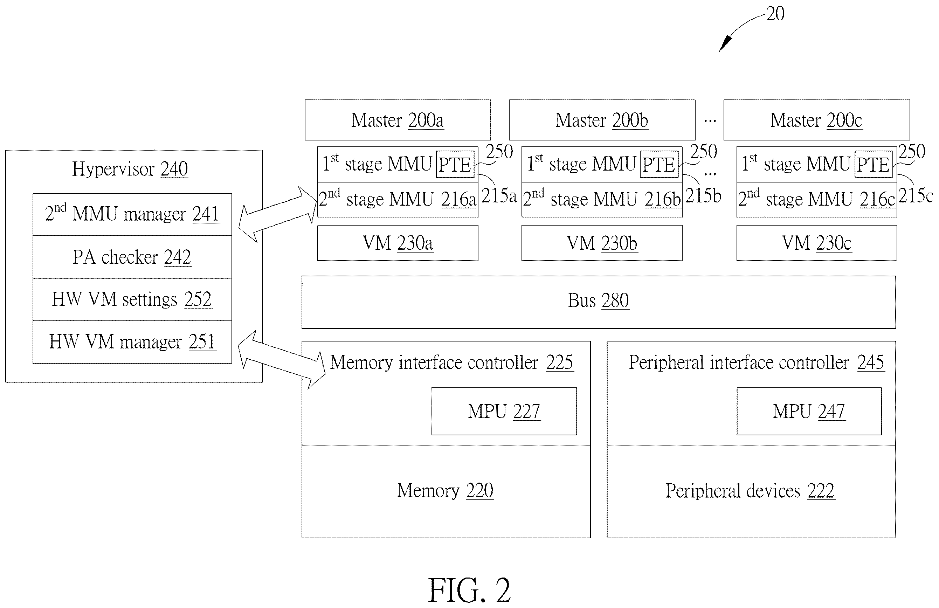

FIG. 2 is a diagram illustrating a system 20 for controlling access to a PA space according to an embodiment of the present invention. The system 20 includes multiple masters such as 200a, 200b, 200c, etc., collectively referred to as masters 200, wherein each master is a hardware component that initiates an access request to access a target system resource such as a memory, a peripheral device, etc. Examples of the masters 200 include, but are not limited to, one or more of the following processing circuits: a central processing unit (CPU), a graphics processing unit (GPU), a digital signal processor (DSP), a multi-media processor, an artificial intelligence (AI) processing unit (APU), a direct memory access (DMA) controller, and a general-purpose/ special-purpose processing circuitry.

In one embodiment, the system 20 is arranged to execute multiple VMs, wherein the total number of the VMs and the given region in the PA space are pre-configured in hardware.

In one embodiment, the masters 200 may be a part of a system on chip (SoC) platform. It is understood the embodiment of FIG. 2 is simplified for illustration purposes. Additional hardware components may be included, and some of the components shown in FIG. 2 may be omitted.

In one embodiment, the masters 200 have access to target system resources such as a memory 220. The memory 220 may be the system memory or the main memory of the system 20. The memory 220 may be a random access memory (e.g., a dynamic random access memory (DRAM)), a flash memory, a volatile memory, and/or a non-volatile memory. The masters 200 may access the memory 220 via a bus 280 or another form of interconnect. Access to the memory 220 is under the control of a memory interface controller 225. In one embodiment, the masters 200 are arranged to execute instructions stored in the memory 220 to run applications and perform system activities.

In one embodiment, the masters 200 also have access to target system resources such as peripheral devices 222, also referred to as I/O devices such as a keyboard, a speaker, a microphone, a display, a camera, etc. The peripheral devices 222 may be accessed via the bus 280 or another form of interconnect under the control of a peripheral interface controller 245. The peripheral devices 222 may include I/O devices and may be memory-mapped. For example, the peripheral interface controller 245 may include or control a device controller that is mapped to a PA range in which I/0 data speed, format, etc., are passed between the masters 200 and the device controller.

In one embodiment, each of the masters 200 uses a memory management unit (MMU) to perform two-stage address translations. Some of the MMUs may be called system SMMUs. Thus, it should be understood that the MMUs illustrated and described herein may include one or more SMMUs.

A first-stage (1^{st} stage) MMU 215 (e.g., a 1^{st} stage MMU 215a corresponding to the master 200a, a 1^{st} stage MMU 215b corresponding to the master 200b, and a 1^{st} stage MMU 215c corresponding to the master 200c) translates from a virtual address (VA) space to an intermediate physical address (IPA) space, and a second-stage (2^{nd} stage) MMU 216 (e.g., a 2^{nd} stage MMU 216a corresponding to the master 200a, a 2^{nd} stage MMU 216b corresponding to the master 200b, and a 2^{nd} stage MMU 216c corresponding to the master 200c) translates from the IPA space to a PA space in which all of the system resources (e.g., the memory 220 and the peripheral devices 222) are addressable. The mapping between the VA space to the IPA space (i.e., the first-stage MMU 215) is managed by a guest operating system that runs on a VM (e.g., VMs 230a, 230b, 230c, etc.), and the mapping between the IPA space to the PA space (i.e., the second-stage MMU 216) is managed by a hypervisor 240 or a host operating system that manages the hardware resources of the system 20, wherein each of the hypervisor 240 and the host operation system may be a software module performed by loading and executing the computer program code PROG via the processor 12. The hypervisor 240 may run on a host operating system; alternatively, the hypervisor 240 may be a part of the host operating system. In one embodiment, multiple masters 200 may share the same MMU; e.g., multiple DMA controllers may share the same SMMU to perform data transfers between the devices in the system 20.

In one embodiment, each second-stage MMU 216 provides master-side access control according to configurable settings that specify which master 200 has access to which page (e.g., a 4K-byte block) in the PA space. The configurable settings are managed by a second-stage MMU manager 241 in the hypervisor 240. In one embodiment, the hypervisor 240 includes a PA checker 242, which verifies the validity of a requested PA in an access request. If the requested PA is verified, the access request is passed on to the target-side access control.

The target-side access control is performed by MPUs, such as MPUs 227 and 247 in FIG. 2. The memory interface controller 225 includes the MPU 227. The MPU 227 may store the mapping (i.e., allocation) between VMs and the masters 200. Different masters 200 may be mapped to the same VM (i.e., a shared VM) or different VMs. In this embodiment, the master 200a is mapped to the VM 230a, the master 200b is mapped to the VM 230b, and the master 200c is mapped to the VM 230c. The MPU 227 may grant or deny the access request according to a sideband signal, wherein the sideband signal is included in a page table entry (PTE) 250 utilized by each first-stage MMU 215 for virtual-to-physical address translation, and the sideband signal indicates whether the requested PA is accessible to a requesting VM executed on the requesting processing circuit.

The peripheral interface controller 245 includes the MPU 247, which performs analogous functions to the MPU 227. The MPU 247 may also grant or deny the access request according to the above-mentioned sideband signal, wherein the access request is with respect to regions in the PA space that are allocated to controllers of the peripheral devices 222.

The MPUs 227 and 247 together with the sideband signal provide target-side protection by restricting the physical memory and the memory-mapped resources that a VM can access. This hardware-based memory protection mechanism has low complexity and low overhead. The MPUs 227 and 247 and the sideband signal can be configured by a hardware VM manager 251 in the hypervisor 240. In one embodiment, the mapping between each VM and the corresponding PA regions, blocks, or segments, is stored in hardware VM settings 252.

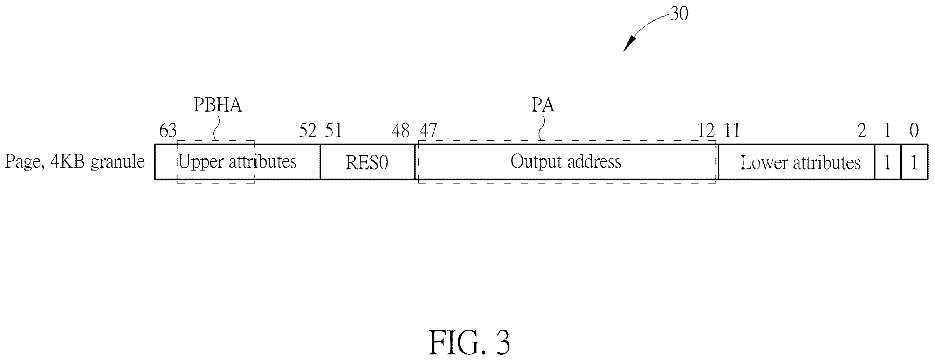

FIG. 3 is a diagram illustrating a format of a PTE 30 utilized by an MMU for virtual-to-physical address translation according to an embodiment of the present invention, wherein the PTE 250 shown in FIG. 2 may be implemented by the PTE 30. As shown in FIG. 3, the PTE 30 with a size of 4 KB granule may include multiple fields, such as a descriptor type field (0-1 bits), a lower attributes field (2 - 11 bits), an output address field (12 - 47 bits), a reserved (RES0) field (48 - 51 bits), and an upper attributes field (52 - 63 bits), wherein the output address field may indicate a PA, a portion of the upper attributes field may indicate a page-based hardware attribute (PBHA), and the PBHA may indicate access rights information of each VM with respect to the PA space. In one embodiment, the PBHA may be an indication of one or more address ranges for a corresponding VM and master, where the one or more address ranges contain the physical addresses accessible by the VM and the master 200 allocated with the VM. For each address range, the PBHA may further indicate the types of access rights; e.g., read, write, execute, etc. The address range may be a fixed-sized address block or a configurable-sized address segment. The above-mentioned sideband signal may be the PBHA, that is, the MPUs 227 and 247 may grant or deny the access request according to the PBHA included in the PTE 30 carried/utilized by the first-stage MMUs 215.

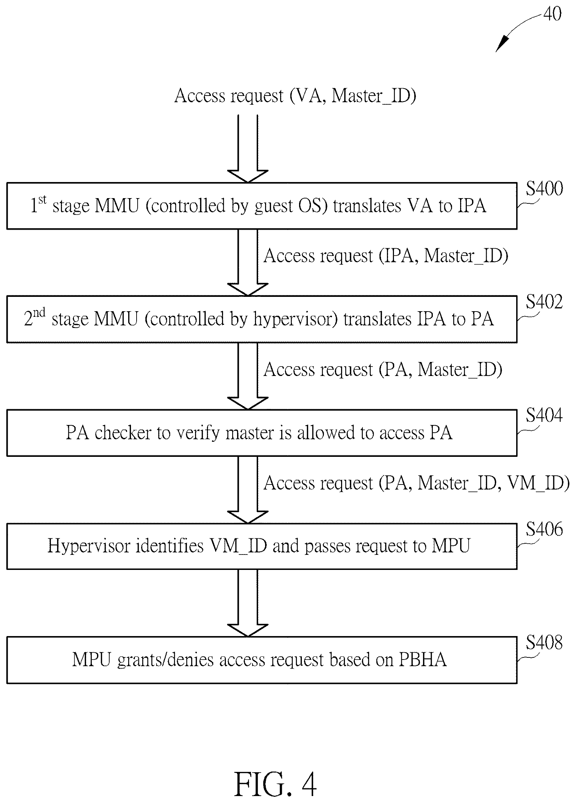

FIG. 4 is a diagram illustrating a process 40 including multiple stages of address mapping in response to an access request according to an embodiment of the present invention. Initially, a master identified by a master identification (ID) Master_ID sends an access request to a corresponding MMU, wherein the access request identifies a requested VA. As mentioned before with reference to FIG. 2, the first-stage MMU 215 translates a VA to an IPA (Step S400), and the second-stage MMU 216 translates the IPA to a PA (Step S402). The PA checker 242 verifies that the master is allowed to access the PA (Step S404). From hardware VM settings 252 (FIG. 2), the hypervisor 240 identifies the VM ID VM_ID for the VM allocated with the PA, and the access request identifying the PA, the master ID Master_ID, and the VM ID VM_ID is passed on to the MPU 227 (Step S406). Based on the PBHA included in the PTE 250/30 carried/utilized by the first-stage MMUs 215, the MPU 227 grants or denies the access request (Step S408).

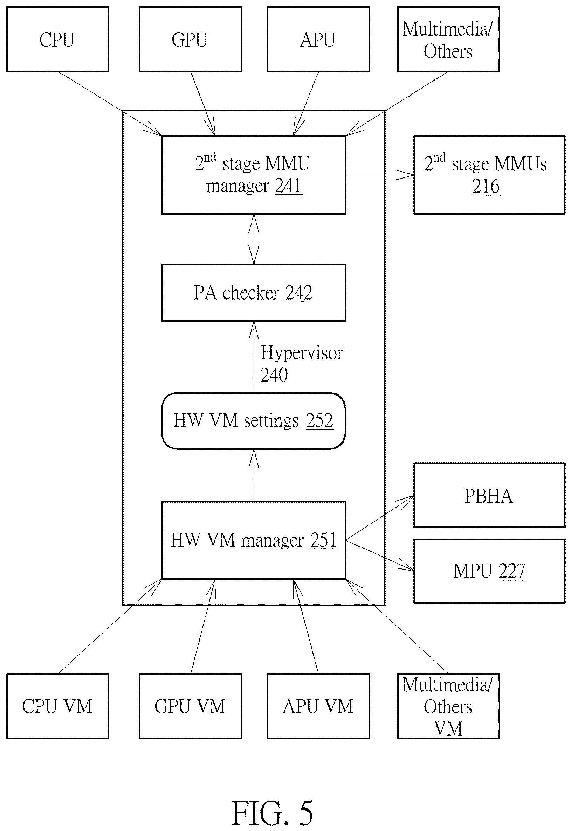

FIG. 5 is a diagram illustrating the management of memory protection according to an embodiment of the present invention. In this embodiment, the second-stage MMU manager 241 manages and configures the address translations performed by the second-stage MMU 216, as well as the PA checker 242 regarding the PA addresses that each master is allowed to access. The masters in this example include, but are not limited to, a CPU, a GPU, an APU, and a multi-media processor. Each master executes a VM, and different masters execute different VMs. For example, the CPU executes a CPU VM; the GPU executes a GPU VM; the APU executes an APU VM; and the multi-media processor executes a multi-media processor VM. The memory protection provided by the second-stage MMU 216 and the PA checker 242 is further enhanced by the hardware VM manager 251, which manages and configures the hardware VM settings 252, the MPU 227, and the PBHA. The hardware VM manager 251 also manages any additional MPUs in the system, which are not shown in the examples in FIG. 2 to simplify the illustration. The MPUs (and the PBHA) provide hardware-based memory isolation to prevent each master from accessing the VMs that are allocated to other masters. In one embodiment, both the MMUs and the MPUs are used to provide hardware-based memory isolation to further enhance the security of the system.

The hardware VM settings 252 store the mapping between the VMs and PA blocks/segments. The hardware VM settings 252 may also store the mapping between masters and VMs. Thus, after the PA checker 242 verifies that a requesting master (e.g., the CPU) is allowed to access the PA in the access request, further verification is carried out by the MPU 227 and the PBHA to determine whether the VM executed on the requesting master (e.g., the CPU VM) is allowed to access the PA.

In one embodiment, the PA block size in each VM is greater than the page size used by the second-stage MMU 216. For example, the PA block size may be configured to be 2 megabytes (MB), 1 gigabyte (GB), etc. The page size used by the second-stage MMU 216 may be 4 kilobytes (KB). Managing access control with a small page size (e.g., 4 KB) incurs a significant overhead and degrades system performance. Thus, in some embodiments, the access control performed by the second-stage MMU 216 may be disabled to improve system performance. In these embodiments, memory protection can be provided by the MPUs and the PBHA.

In some embodiments, the hypervisor 240 may use a configuration to indicate to the second-stage MMU manager 241 to enable or disable the master-side access control performed by the second-stage MMU 216. Similarly, the hypervisor 240 may use the configuration to indicate to the hardware VM manager 251 to enable or disable the target-side access control performed by the MPU 227 and the PBHA. Thus, three alternatives exist with respect to access control. (1) The second-stage MMU 216 is disabled, and the MPU 227 is enabled. (2) The second-stage MMU 216 is enabled, and the MPU 227 is disabled. (3) Both the second-stage MMU 216 and the MPU 227 are enabled. For example, when the system is running at low performance and the PA block size used by the MPU 227 is greater than the 4 KB size used by the second-stage MMU 216, the hypervisor 240 can disable the access control performed by the second-stage MMU 216 to improve system performance.

In one embodiment, the hypervisor 240 analyzes the requested PA addresses to identify access patterns. For example, when all of the requested PA addresses from a master fall into a limited address range, the hypervisor 240 can enable the corresponding MPU to limit the access to that address range. This limited address range may be configured to be used by a single master, shared by multiple masters at the same time or on a time-division multiplexed basis.

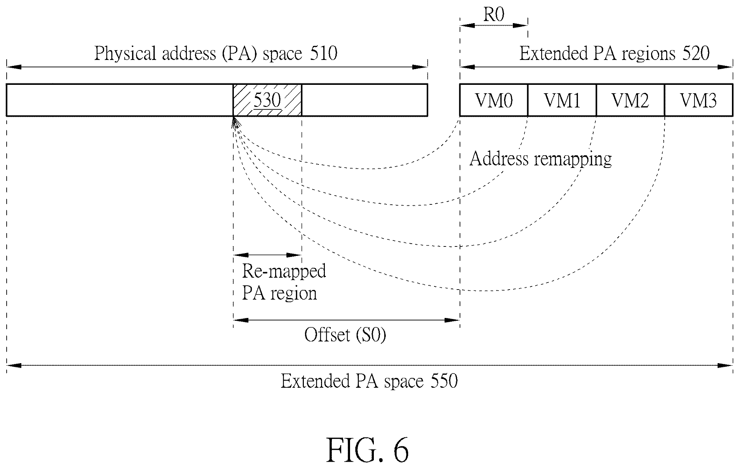

FIG. 6 is a diagram illustrating the address mapping between VMs and PA space according to an embodiment of the present invention. In the second-stage MMU translation, physical addresses allocated to VMs are mapped into extended PA regions 520. For example, a virtual address allocated to VM0 is mapped to R0, which is an extended PA region 520 allocated to VM0. In an example of four VMs, each VM is allocated with one extended PA region, and different VMs are allocated with different extended PA regions. All of the extended PA regions 520 are non-overlapping and have the same size. The extended PA regions 520 are outside of a PA space 510, and the PA space 510 and the extended PA regions 520 are collectively referred to as an extended PA space 550. It is understood that the memory protection mechanism described herein is applicable to any number of VMs.

All of the extended PA regions 520 are remapped to a remapped PA region 530 in the PA space 510. The remapped PA region 530 is dedicated to addressing the VMs. The remapping is performed by hardware. In one embodiment, different extended PA regions 520 have different offsets from the remapped PA region 530. The offsets are also referred to as base address offsets. For example, the extended PA region (R0) allocated to VM0 has an offset (S0) from the remapped PA region; more specifically, the base address of R0 is offset from the base address of the remapped PA region 530 by S0. The extended PA region allocated to VM1 may have an offset (S1) from the remapped PA region 530, wherein S1 = S0 + the size of R0. The offsets for the extended PA regions allocated to VM2 and VM3 can be similarly calculated. Taking R0 as an example, the remapping of R0 to the remapped PA region 530 shifts each address in R0 by S0. The remapping of other extended PA regions can be similarly calculated.

In one embodiment, the extended PA regions 520 allocated to the VMs may not be immediately adjacent to the PA space 510; alternatively, the extended PA regions 520 allocated to the VMs may be immediately adjacent to the PA space 510. In one embodiment, the extended PA regions 520 allocated to different VMs may be consecutive in the extended PA space 550 as shown in FIG. 6; alternatively, the extended PA regions 520 allocated to different VMs may be non-consecutive in the extended PA space 550. In one embodiment, the base address and/or the size of each extended PA region 520 may be configurable.

Allocating the extended PA regions 520 to VMs enables a system to use different page sizes (or block sizes) for a guest operating system and a host operating system. Suppose that the VMs VM0-VM3 run on top of multiple instances of a guest operating system in a computing system. The guest operating system may use a first page size for virtual memory management. The host operating system of the computing system can use a second page size (or block size) that is greater than the first page size for virtual memory management. A larger page size can reduce the overhead of host system operations. On the other hand, a smaller page size may be more suitable for VM operations. The MMU of each processor may perform address translations using the first page size for host system operations and the second page size for VM operations.

Refer back to FIG. 2. The memory interface controller 225 may receive an access request from a requesting VM (e.g., the VM VM0) for accessing a requested address in the PA space. From the access request and the hardware VM settings 252, a domain ID (also referred to as the VM ID) for the requesting VM is identified as VM0. The MPU 227 checks the PBHA to determine whether the access request should be granted or denied. The description in FIG. 5 may apply to access control with respect to the memory 220 and the peripheral devices 222 in FIG. 2.

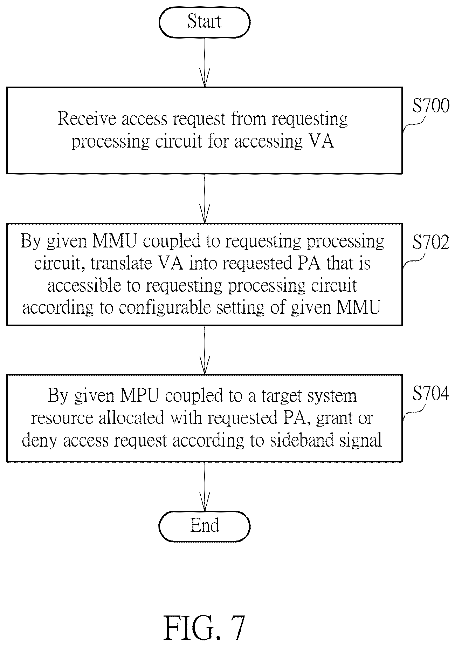

FIG. 7 is a flow chart of a method for controlling access to a PA space according to an embodiment of the present invention. Provided that the result is substantially the same, the steps are not required to be executed in the exact order shown in FIG. 7. For example, the method shown in FIG. 7 may be employed by a system (e.g., the system 20 shown in FIG. 2) that includes multiple processing circuits and multiple system resources addressable within the PA space. The processing circuits may include one or more processors and one or more DMA controllers. The system resources may include one or more memory devices and one or more peripheral devices.

In Step S700, an access request is received from a requesting processing circuit for accessing a VA, wherein the requesting processing circuit executes a requesting VM, and a given region of the PA space is dedicated to addressing VMs executed in the system.

In Step S702, by a given MMU coupled to the requesting processing circuit, the VA is translated into a requested PA that is accessible to the requesting processing circuit according to a configurable setting of the given MMU.

In Step S704, by a given MPU coupled to a target system resource allocated with the requested PA, the access request is granted or denied according to a sideband signal, wherein the sideband signal is included in a PTE utilized by the given MMU for virtual-to-physical address translation, and the sideband signal indicates whether the requested PA is accessible to a requesting VM executed on the requesting processing circuit. For example, the sideband signal may be a PBHA included in the PTE utilized by the first-stage MMU.

In one embodiment, the system includes multiple MMUs and multiple MPUs. Each MMU includes a first-stage MMU and a second-stage MMU. The second-stage MMU is arranged to perform master-side access control for a corresponding processing circuit and is configurable to be disabled. Each MPU is arranged to perform target-side access control for a corresponding system resource and is configurable to be disabled. The second-stage MMU is arranged to perform master-side access control using a page size and the MPU is arranged to perform target-side access control using a block size greater than the page size.

In one embodiment, the system is configured to execute multiple VMs, wherein the total number of the VMs and the given region in the PA space are pre-configured in hardware.

The operations of the flow chart shown in FIG. 7 have been described with reference to the exemplary embodiment of FIG. 2. However, it should be understood that the operations of the flow chart shown in FIG. 7 can be performed by embodiments of the invention other than the embodiment of FIG. 2, and the embodiment of FIG. 2 can perform operations different than those discussed with reference to the flow chart. While the flow chart shown in FIG. 7 shows a particular order of operations performed by certain embodiments of the invention, it should be understood that such order is exemplary (e.g., alternative embodiments may perform the operations in a different order, combine certain operations, overlap certain operations, etc.).

## Claims

1. A system (20) for controlling access to a physical address (PA) space (510), **characterized by**:
a plurality of processing circuits (12) executing a plurality of virtual machines (VMs) (230), wherein a given region of the PA space (510) is dedicated to addressing the plurality of VMs (230);
a plurality of system resources (220, 222) addressable within the PA space (510);
a plurality of memory management units (MMUs) (215, 216), coupled to corresponding processing circuits (12), wherein a given MMU is arranged to translate a virtual address indicated in an access request from a requesting processing circuit into a requested PA that is accessible by the requesting processing circuit according to a configurable setting of the given MMU; and
a plurality of memory protection units (MPUs) (227, 247), wherein a given MPU, which is coupled to a target system resource allocated with the requested PA, is arranged to grant or deny the access request according to a sideband signal, wherein the sideband signal is comprised in a page table entry (PTE) (250, 30) utilized by the plurality of MMUs for virtual-to-physical address translation, and the sideband signal indicates whether the requested PA is accessible to a requesting VM executed on the requesting processing circuit.

2. The system (20) of claim 1, **characterized in that** each of the plurality of MMUs comprises a first-stage MMU (215) and a second-stage MMU (216), and the sideband signal is a page-based hardware attribute comprised in the PTE (250, 30) utilized by the first-stage MMU (215).

3. The system (20) of any one of claims 1 or 2, **characterized in that** each of the plurality of MMUs comprises a first-stage MMU (215) and a second-stage MMU (216), and the second-stage MMU (216) is arranged to perform master-side access control for a corresponding processing circuit (12) and is configurable to be disabled.

4. The system (20) of any one of claims 1 to 3, **characterized in that** each of the plurality of MPUs (227, 247) is arranged to perform target-side access control for a corresponding system resource and is configurable to be disabled.

5. The system (20) of any one of claims 1 to 4, **characterized in that** a total number of the VMs (230) and the given region in the PA space (510) are pre-configured in hardware.

6. The system (20) of any one of claims 1 to 5, **characterized in that** each of the plurality of MMUs comprises a first-stage MMU (215) and a second-stage MMU (216), the second-stage MMU (216) is arranged to perform master-side access control using a page size and the MPU (227, 247) is arranged to perform target-side access control using a block size greater than the page size.

7. The system (20) of any one of claims 1 to 6, **characterized in that** the plurality of processing circuits (12) comprise one or more processors and one or more direct memory access (DMA) controllers.

8. The system (20) of any one of claims 1 to 7, **characterized in that** the plurality of system resources comprise one or more memory devices (220) and one or more peripheral devices (222).

9. A method for controlling access to a physical address (PA) space (510) in a system (20) that comprises a plurality of processing circuits (12) and a plurality of system resources (220, 222), **characterized by**:
receiving an access request from a requesting processing circuit for accessing a virtual address, wherein the requesting processing circuit executes a requesting virtual machine (VM) (230), and a given region of the PA space (510) is dedicated to addressing VMs (230) executed in the system;
translating, by a given memory management unit (MMU) (215, 216) coupled to the requesting processing circuit, the virtual address into a requested PA that is accessible to the requesting processing circuit according to a configurable setting of the given MMU; and
granting or denying, by a given memory protection unit (MPU) (227, 247) coupled to a target system resource (220, 222) allocated with the requested PA, the access request according to a sideband signal, wherein the sideband signal is comprised in a page table entry (PTE) (250, 30) utilized by the given MMU for virtual-to-physical address translation, and the sideband signal indicates whether the requested PA is accessible to a requesting VM executed on the requesting processing circuit.

10. The method of claim 9, **characterized in that** the given MMU comprises a first-stage MMU (215) and a second-stage MMU (216), and the sideband signal is a page-based hardware attribute comprised in the PTE (250, 30) utilized by the first-stage MMU (215).

11. The method of any one of claims 9 or 10, **characterized in that** the given MMU comprises a first-stage MMU (215) and a second-stage MMU (216), and the method further comprises:
setting a configuration to enable or disable master-side access control performed by the second-stage MMU (216) for the requesting processing circuit.

12. The method of any one of claims 9 to 11, further **characterized by**:
setting a configuration to enable or disable target-side access control performed by the given MPU (227, 247) for the target system resource.

13. The method of any one of claims 9 to 12, **characterized in that** a total number of the VMs (230) and the given region in the PA space (510) are pre-configured in hardware (16).

14. The method of any one of claims 9 to 13, **characterized in that** each MMU comprises a first-stage MMU (215) and a second-stage MMU (216), and the second-stage MMU (216) is arranged to perform master-side access control using a page size and the MPU (227, 247) is arranged to perform target-side access control using a block size greater than the page size.

15. The method of any one of claims 9 to 14, **characterized in that** the plurality of processing circuits (12) comprise one or more processors and one or more direct memory access (DMA) controllers, and the plurality of system resources comprise one or more memory devices (220) and one or more peripheral devices (222).
